(19) Europäisches Patentamt

European Patent Office

Office européen des brevets

(11) **EP 1 249 463 B1**

(12) **EUROPÄISCHE PATENTSCHRIFT**

(45) Veröffentlichungstag und Bekanntmachung des Hinweises auf die Patenterteilung:
**25.01.2006 Patentblatt 2006/04**

(51) Int Cl.:
*C08G 64/20* *(2006.01)*  *C08G 64/24* *(2006.01)*

(21) Anmeldenummer: **02007272.4**

(22) Anmeldetag: **02.04.2002**

(54) **Verfahren zur Herstellung von Polycarbonaten**

Process for the preparation of polycarbonates

Procédé pour la préparation de polycarbonates

(84) Benannte Vertragsstaaten:
**AT BE CH CY DE DK ES FI FR GB GR IE IT LI LU MC NL PT SE TR**

(30) Priorität: **12.04.2001 DE 10118307**

(43) Veröffentlichungstag der Anmeldung:
**16.10.2002 Patentblatt 2002/42**

(73) Patentinhaber: **Bayer MaterialScience AG**
**51368 Leverkusen (DE)**

(72) Erfinder:
• **Kauth, Hermann, Dr.**
**47803 Krefeld (DE)**
• **Kords, Christian**
**47829 Krefeld (DE)**
• **Heuser, Jürgen, Dr.**
**47803 Krefeld (DE)**

(56) Entgegenhaltungen:
**DE-A- 4 227 372**

**Beschreibung**

Gegenstand der vorliegenden Erfindung ist ein Verfahren zur kontinuierlichen Herstellung von Polycarbonaten nach der Methode des Zweiphasengrenzflächenverfahrens unter Verwendung eines speziellen Apparatesystems und von speziellen Fahrparametern, welches eine geringe organische Belastung des Abwassers ermöglicht.

Bei der Herstellung von Polycarbonaten hat sich das Zweiphasengrenzflächenverfahren seit vielen Jahren bewährt. Das Verfahren ermöglicht die Herstellung von thermoplastischen Polycarbonaten für eine Reihe von Einsatzgebieten wie z.B. Datenträger (CD, DVD), optische Anwendungen oder medizinische Anwendungen.

Häufig werden als wichtige Qualitätsmerkmale für das Polycarbonat eine gute Thermostabilität und eine geringe Vergilbung beschrieben. Wenig Beachtung fand bisher die Qualität des bei der Herstellung von Polycarbonaten anfallenden Abwassers. Insbesondere die Belastung des Abwassers mit Restorganika wie z.B. Restphenolen ist dabei von Bedeutung für eine evtl. weitere Behandlung des Abwassers z.B. durch eine Kläranlage oder durch eine Ozonolyse zur Oxidation der Restorganika. Hier hat es eine Reihe von Anmeldungen gegeben, in denen aber überwiegend Methoden zur nachträglichen Abwasserbehandlung beschrieben werden, mit dem Ziel, die Belastung an phenolischen Komponenten zu reduzieren - siehe z.B.: JP 08 245 780 A (Idemitsu); DE 19 510 063 A1 (Bayer); JP 03 292 340 A (Teijin); JP 03 292 341 A (Teijin); JP 02 147 628 A (Teijin).

Die Belastung des Abwassers mit Restorganika wie z.B. mit Bisphenolen oder Phenolen kann gering gehalten werden, wenn mit einem hohem Phosgenüberschuss gearbeitet wird. Dies ist aber aus wirtschaftlichen Gründen unerwünscht.

Bei der Herstellung von Polycarbonaten mit reduziertem Phosgenüberschuss besteht die Gefahr, dass nicht alles Bisphenol bzw. alles Monophenol abreagiert und das Abwasser belastet. Weiterhin besteht die Gefahr, dass die Phasenseparation und die Wäsche dadurch erschwert ist, dass im Polymer grenzflächenaktive phenolische OH-Gruppen verbleiben. Unter diesen Umständen werden gegebenenfalls nicht alle wasserlöslichen Verunreinigungen aus der organischen Phase extrahiert. Dies kann wiederum die Produktqualität negativ beeinflussen.

Es bleibt festzuhalten, dass die Herstellung von Polycarbonat hoher Qualität nach einem kontinuierlichen Zweiphasengrenzflächenverfahren bei gleichzeitig geringer Belastung des Abwassers entweder nur mit hohem Phosgenüberschuss (unwirtschaftlich!) oder mit Phasentrennproblemen - verbunden mit Qualitätseinbußen des Polycarbonates - oder durch nachträgliche Behandlung des Abwassers möglich war.

Als nächstliegender Stand der Technik ist die DE-A 42 27 372 der Anmelderin zu betrachten, in welcher bereits die apparative Anordnung des erfindungsgemäßen Verfahrens beschrieben ist. Im Gegensatz zur erfindungsgemäßen Lehre ist jedoch der DE-A 42 27 372 keinerlei Lehre zu entnehmen in welchen Mengen- und vor allem in welchen Umpumpverhältnissen die Edukte zusammengeführt werden, geschweige denn, dass mittels speziell eingestellter Mengen- und Umpumpverhältnissen eine besonders geringe Abwasserbelastung mit Restorganika, wie Phenolen und Bisphenolen, erreicht werden kann.

Ausgehend von DE-A 42 27 372 als nächstliegendem Stand der Technik stellte sich somit die Aufgabe, ein Verfahren zu Verfügung zu stellen, welches die Herstellung von hohen Produktqualitäten bei gleichzeitig geringer Abwasserbelastung mit organischen Stoffen ermöglicht.

Es wurde nun überraschend gefunden, dass man Polycarbonat kontinuierlich in sehr guter Produktqualität - gemessen am Yellowness-Index und am Gehalt an phenolischen OH-Endgruppen - und bei gleichzeitiger geringer Belastung des Abwassers durch Restorganika (Restphenole) erhält, wenn man als Reaktorenanordnung das Apparatesystem Umpumpreaktor plus mindestens einem diesem nachgeschalteten Rohrreaktor verwendet, wobei in dem Apparatesystem spezielle Reaktionsbedingungen eingestellt werden und dabei im Umpumpreaktor ein spezielles Verhältnis von zudosierten Ausgangskomponenten zu der im Umpumpreaktor befindlichen Menge an umgepumpter Reaktionsemulsion eingestellt wird.

Ein Umpumpreaktor besteht dabei aus einer Umpumpschleife enthaltend eine Pumpe zur Umpumpung der Reaktionsemulsion, gegebenenfalls als Mischer ausgestaltete Dosierstellen für organische Phase (Lösungsmittel enthaltend Phosgen) und wässrige Phase (Alkalilauge und Diphenolkomponente), einen Wärmeaustauscher sowie einen Verweilkessel, der parallel mit einer Entnahmemöglichkeit zur kontinuierlichen Entnahme eines Teilstromes ausgestattet ist.

Zum besseren Verständnis sei der "Umpumpreaktor" noch schematisch dargestellt:

```
                                        ┌──────────────┐
                                        │   Verweil    │
                                        │   -kessel    │
                    ┌──────────────────▶│              │
                    │                   │              │
                    │                   └──────┬───────┘
                    │                          │         ──▶ Zum Rohrreaktor
                    │                          │
            ┌───────┴──────┐                   ▼
            │              │           ┌──────────────┐◀── Organische Phase,
            │   Wärme-     │           │              │     enthaltend Phosgen
            │   tauscher   │           │   Mischer    │
            │              │           │  (optional)  │◀── Wässrige Phase,
            │              │           │              │     enthaltend
            └──────┬───────┘           └──────┬───────┘     Bisphenol A und
                   ▲                          │             Alkali
                   │                          │
                   │                          │
                   │        ┌──────────┐      │        ◀── Alkali
                   └────────│  Pumpe   │◀─────┘
                            └──────────┘
```

Ein Rohrreaktor besteht dabei aus Misch- und Verweilzeitrohren und ist hinter der Entnahmestelle am Verweilkessel des Umpumpreaktors nachgeschaltet.

Gegenstand der vorliegenden Anmeldung ist ein Verfahren, zur kontinuierlichen Herstellung von Polycarbonaten mit geringer Belastung des Abwassers mit Restorganika (Restphenolen) nach der Methode des Zweiphasengrenzflächen-Verfahrens aus Diphenolen, Phosgen, Kettenabbrechern, Katalysator und gegebenenfalls Veizweigern in einem Gemisch aus wässrig-alkalischer Phase und organischer Lösungsmittelphase umfassend die folgenden Verfahrensschritte:

1. Kontinuierliches Zusammenführen der organischen Phase und der wässrigen Phase in einem Umpumpreaktor, gegebenenfalls unter Verwendung eines Mischers, wobei die organische Phase ein für das Polycarbonat geeignetes Lösungsmittel ist und bereits das Phosgen enthält und die wässrige Phase aus Wasser und einem Gemisch von Alkalilauge und phenolischen Komponenten (Bisphenol und gegebenenfalls Monophenol als Kettenabbrecher) besteht,
wobei
2. im Umpumpreaktor durch den Wärmetauscher eine Temperatur von weniger als 60°C, vorzugsweise von 55°C - 25°C eingestellt ist, der Umpumpreaktor eine mittlere Verweilzeit von mindestens 2 Minuten, bevorzugt zwischen 2 und 15 Minuten anbietet und eine Teilmenge der entstandenen Emulsion kontinuierlich über den Verweilkessel aus dem Umpumpreaktor abgenommen wird,
und
3. die entnommene Teilmenge dieser Emulsion dann durch Rohrreaktoren gepumpt wird, die mit Misch- und Verweilzonen ausgestattet sind und insgesamt eine Verweilzeit zwischen 2 Minuten und 40 Minuten, vorzugsweise 2-30 Minuten anbieten,

wobei

1) das Verhältnis (ausgedrückt in Molen/Mole) von dosierter Phosgenmenge zur Phosgenmenge, die theoretisch notwendig ist, um alles Bisphenol und Phenol zur Reaktion zu bringen, zwischen 1,12 und 1,22, vorzugsweise zwischen 1,14 und 1,20 beträgt,

2) Phosgenlösung und Bisphenollösung werden dabei innerhalb des Umpumpreaktors direkt hinter dem Verweilkessel in die Umpumpschleife dosiert, der Kettenabbrecher kann ebenfalls in diese Umpumpschleife oder gegebenenfalls direkt in die Rohrreaktoren gefördert werden, s. 5)

3) innerhalb des Umpumpreaktors wird auf die Saugseite der Pumpe Alkalilauge in einer Menge von 15 - 40 %, vorzugsweise 20 - 35 %, der insgesamt nachzudosierenden Menge nachdosiert,

4) innerhalb des Umpumpreaktors werden in die Umpumpschleife gemäß 2) Bisphenol A- und Phosgenlösungen so zudosiert, dass deren Gesamtmenge (Die Summe aus beiden Lösungen, gemessen in $m^3/h$) im Verhältnis zur Menge an umgepumpter Reaktionsemulsion, gemessen als Durchflußmenge an einem Querschnitt der Umpumpschleife (ebenfalls gemessen in $m^3/h$), zwischen 1:3 und 1:12, vorzugsweise zwischen 1:3 und 1:10 liegt und die am Verweilkessel entnommene Teilmenge der Gesamtmenge der zudosierten Lösungen entspricht,

5) in die aus dem Verweilkessel entnommene Teilmenge, unmittelbar vor der Einleitung in den Rohrreaktor, weitere Alkalilauge (85 - 60 %, vorzugsweise 80 - 65 % der gesamten nachzudosierenden Alkalilauge) und gegebenenfalls Kettenabbrecher zugegeben wird und

6) nach weiteren 1 - 20 Minuten, vorzugsweise 1 - 15 Minuten Verweilzeit im Rohrreaktor Katalysator zugegeben wird.

"hinter" und "vor" sind im vorliegenden Zusammenhang immer in Flußrichtung der Emulsion innerhalb des Umpumpreaktors zu verstehen.

Durch den Einsatz dieses Verfahrens wird ein Gehalt an phenolischen Komponenten im unbehandelten Reaktionsabwasser von weniger als 100 ppm, bevorzugt weniger als 50 ppm, besonders bevorzugt weniger als 20 ppm erreicht.

Geeignete Diphenole sind solche der Formel HO-Z-OH, in denen Z ein aromatischer Rest mit 6 bis 45 C-Atomen ist, der einen oder mehrere aromatische Kerne enthalten kann, substituiert sein kann und aliphatische Reste oder cycloaliphatische Reste oder Heteroatome als Brückenglieder enthalten kann.

Beispiele sind

Dihydroxydiphenyle,

Bis-(hydroxyphenyl)-alkane

Bis-(hydroxyphenyl)-cycloalkane

Bis-(hydroxyphenyl)-sulfide

Bis-(hydroxyphenyl)-ether

sowie deren kemalkylierte und kernhalogenierte Verbindungen.

Diese und weitere geeignete andere Diphenole sind z.B. in den US-PS 3 028 365, 4 982 014, 2 999 835, 3 148 172, 3 275 601, 2991273, 3271367, 3 062 781, 2 970 131 und 2 999 846, in den DE-A 15 70 703, 20 63 050, 20 63 052, 22 11 956, der französischen Patentschrift 1 561 518 und in der DE-A 38 33 953 beschrieben.

Bevorzugte Diphenole sind:

2,2-Bis-(4-hydroxyphenyl)-propan (Bisphenol-A) und 1,1-Bis-(4-hydroxyphenyl)-3,3,5-trimethyl-cyclohexan (TMC-Bisphenol).

Es sei hier betont, dass das erfindungsgemäße Verfahren praktisch für alle bekannten Diphenole eingesetzt werden kann.

Die Diphenole werden im erfindungsgemäßen Verfahren in wässrig alkalischer Lösung eingesetzt, die Konzentration an Diphenolen beträgt dabei 10-20%, bevorzugt 12,5 bis 17,5 %, die Menge an Alkali beträgt 1,0 bis 3,0 Mol Alkalilauge pro Mol Bisphenol sie ist abhängig von der Löslichkeit des eingesetzten Bisphenols.

Das Phosgen wird in organischen Lösungsmitteln in einer Konzentration von 7-10%, bevorzugt 8-9,5% eingesetzt.

Geeignete Kettenabbrecher und Verzweiger sind literaturbekannt. Einige sind beispielsweise in der DE-A 38 33 953 beschrieben. Bevorzugte Kettenabbrecher sind Phenol, Cumylphenol, Isooctylphenol, para-tert.-Butylphenol. Die Kettenabbrecher können rein oder in unterschiedlicher Konzentration als Lösung in organischen Lösungsmitteln dosiert werden.

Bevorzugte Verzweiger sind Trisphenole und Tetraphenole sowie 3,3-Bis-(3-methyl-4-hydroxyphenyl)-2-oxo-2,3-dihydroindol. Auch die Verzweiger können rein oder in unterschiedlicher Konzentration als Lösung in organischen Lösungsmitteln dosiert werden.

Als Alkalilauge werden Natronlauge oder Kalilauge eingesetzt, gegebenenfalls können auch Erdalkalilaugen eingesetzt werden. Bevorzugt wird wässrige Natronlauge. Die Konzentration des NaOH in der wässrigen Natronlauge entspricht derjenigen der kommerziell erhältlichen Laugen, also zwischen 20 und 60 %, bevorzugt zwischen 30 und 50 %, ganz besonders bevorzugt ist Natronlauge welche direkt aus dem Amalgam- bzw. Membranverfahren der Chlor-Alkali-Elektrolyse mit Konzentrationen von ca. 50 bzw. 32 % erhalten wird.

Alle Prozentangaben im vorliegenden Kontext sind als Gew. % zu verstehen, soweit nichts anderes explizit angegeben ist.

Als Katalysatoren kommen im Prinzip alle für die Herstellung von Polycarbonaten nach dem Zweiphasengrenzflächenverfahren bekannten Katalysatoren, wie z.B. tert. Amine in Frage. Bevorzugt werden N-Ethyl-piperidin und Triethylamin.

Die organische Phase enthält Lösungsmittel bzw. ein Lösungsmittelgemisch, welches Polycarbonat löst. Geeignete Lösungsmittel sind alle bekannten Lösungsmittel, die Polycarbonat bei Temperaturen um 20°C zu mindestens 5 Gew.-% zu lösen in der Lage sind sowie deren Gemische.

Bevorzugt sind Methylenchlorid, Toluol, Monochlorbenzol, besonders bevorzugt sind Methylenchlorid und Gemische aus Methylenchlorid und Monochlorbenzol im Verhältnis von 20:80 Gew.-Teilen bis 75:25 Gew.-Teilen.

Über die gesamte Reaktion wird ein pH-Wert zwischen 9 und 14 eingestellt, bevorzugt zwischen 9,5 und 13,0. Dies geschieht dadurch, dass einmal zu Beginn die zum Lösen der Diphenole notwendige Menge Alkalilauge eingesetzt wird und darüber hinaus vor dem Wärmetauscher eine erste Nachdosierung der Alkalilauge erfolgt und daran anschließend vor den Rohrreaktoren gegebenenfalls zusammen mit dem Kettenabbrecher eine zweite Nachdosierung der Alkalilauge erfolgt.

Die Polycarbonate können in bekannter Weise zu beliebigen Formkörpern verarbeitet werden, wobei vor oder während der Verarbeitung die für thermoplastische Polycarbonate üblichen Additive wie Stabilisatoren, Entformungsmittel oder Flammschutzmittel, Füllstoffe oder Glasfasern zugesetzt werden können

Die nach dem erfindungsgemäßen Verfahren erhältlichen Polycarbonate können als beliebige Formkörper oder auch Platten und Folien in bekannter Weise technisch eingesetzt werden, beispielsweise im Automobilsektor oder in optischen Anwendungen, optischen und magnetooptischen Speichermedien.

Beispielhaft, aber ohne einzuschränken seien die folgenden Anwendungen erwähnt:

1. Sicherheitsscheiben, die bekanntlich in vielen Bereichen von Gebäuden, Fahrzeugen und Flugzeugen erforderlich sind, sowie als Schilde von Helmen.

2. Herstellung von Folien, insbesondere Skifolien.

3. Herstellung von Blaskörpern (siehe beispielsweise US-Patent 2 964 794), beispielsweise 1 bis 5 Gallon Wasserflaschen.

4. Herstellung von lichtdurchlässigen Platten, insbesondere von Hohlkammerplatten, beispielsweise zum Abdecken von Gebäuden wie Bahnhöfen, Gewächshäusern und Beleuchtungsanlagen.

5. Herstellung optischer Datenspeicher.

6. Zur Herstellung von Ampelgehäusen oder Verkehrsschildem.

7. Zur Herstellung von Schaumstoffen (siehe beispielsweise DE-B 1 031 507).

8. Zur Herstellung von Fäden und Drähten (siehe beispielsweise DE-B 1 137 167 und DE-A 1 785 137).

9. Als transluzente Kunststoffe mit einem Gehalt an Glasfasern für lichttechnische Zwecke (siehe beispielsweise DE-A 1 554 020).

10. Als transluzente Kunststoffe mit einem Gehalt an Bariumsulfat, Titandioxid und oder Zirkoniumoxid bzw. organischen polymeren Acrylatkautschuken (EP-A 634 445, EP-A 269 324) zur Herstellung von lichtdurchlässigen und lichtstreunenden Formteilen.

11. Zur Herstellung von Präzisionsspritzgußteilchen, wie beispielsweise Linsenhalterungen. Hierzu verwendet man Polycarbonate mit einem Gehalt an Glasfasern, die gegebenenfalls zusätzlich etwa 1 - 10 Gew.-% $MoS_2$, bezogen auf Gesamtgewicht, enthalten.

12. Zur Herstellung optischer Geräteteile, insbesondere Linsen für Foto- und Filmkameras (siehe beispielsweise DE-A 2 701 173).

13. Als Lichtübertragungsträger, insbesondere als Lichtleiterkabel (siehe beispielsweise EP-A1 0 089 801).

14. Als Elektroisolierstoffe für elektrische Leiter und für Steckergehäuse sowie Steckverbinder.

15. Herstellung von Mobiltelefongehäusen mit verbesserter Beständigkeit gegenüber Parfüm, Rasierwasser und Hautschweiß.

16. Network interface devices

17. Als Trägermaterial für organische Fotoleiter.

18. Zur Herstellung von Leuchten, z. B. Scheinwerferlampen, als sogenannte "head-lamps", Streulichtscheiben oder innere Linsen.

19. Für medizinische Anwendungen, z.B. Oxygenatoren, Dialysatoren.

20. Für Lebensmittelanwendungen, wie z. B. Flaschen, Geschirr und Schokoladenformen.

21. Für Anwendungen im Automobilbereich, wo Kontakt zu Kraftstoffen und Schmiermitteln auftreten kann, wie beispielsweise Stoßfänger ggf. in Form geeigneter Blends mit ABS oder geeigneten Kautschuken.

22. Für Sportartikel, wie z. B. Slalomstangen oder Skischuhschnallen.

23. Für Haushaltsartikel, wie z. B. Küchenspülen und Briefkastengehäuse.

24. Für Gehäuse, wie z. B. Elektroverteilerschränke.

25. Gehäuse für Elektrozahnbürsten und Föngehäuse.

26. Transparente Waschmaschinen - Bullaugen mit verbesserter Beständigkeit gegenüber der Waschlösung.

27. Schutzbrillen, optische Korrekturbrillen.

28. Lampenabdeckungen für Kücheneinrichtungen mit verbesserter Beständigkeit gegenüber Küchendunst insbesondere Öldämpfen.

29. Verpackungsfolien für Arzneimittel.

30. Chip-Boxen und Chip-Träger

31. Für sonstige Anwendungen, wie z. B. Stallmasttüren oder Tierkäfige.

Die nachfolgenden Beispiele sollen die vorliegenden Erfindung illustrieren, ohne sie jedoch einzuschränken.

**Beispiele**

**Beispiel 1**

In einem Umpumpreaktor werden vor der Pumpe über ein T-Stück 24.000 kg/h einer alkalischen Bisphenol A - Lösung, die 15 % Gew.-% BPA und 2,1 mol Natronlauge pro mol BPA enthält, sowie über ein weiteres T-Stück 1848 kg/h Phosgen gelöst in 20400 kg/h Lösungsmittel, welches aus 50 Gew.-% Methylenchlorid und 50 Gew.-% Monochlorbenzol besteht, eindosiert.

Zur Aufrechterhaltung der Alkalität werden 360 kg/h 32 %ige Natronlauge zudosiert und das Reaktionsgemisch über einen Wärmetauscher und einen ungerührten Verweilkessel zurück zur Pumpe geleitet, wobei die o.g. Stoffströme zudosiert werden.

Mittels einer Mengenmessung wird die umgepumpte Menge zu 260 m$^3$/h bestimmt.

Die Temperatur beträgt 36°C.

Eine Teilmenge der Emulsion, die so groß ist wie die zufließenden Rohstoffe, wird vor den Dosierstellen für BPA und Phosgen aus dem Verweilkessel einer weiteren Pumpe zugeleitet und durch einen Rohrreaktor gepumpt. Diesem Strom werden 1050 kg/h Natronlauge (32 Gew.-%) sowie 134 kg/h p-tert.-Butylphenol, gelöst in 536 kg Lösungsmittelgemisch, zudosiert. Nach einer Verweilzeit von 10 Min. werden 18 kg/h N-Ethylpiperidin in Form einer 4,8 %igen Lösung in Lösungsmittelgemisch (50 Teile Methylenchlorid und 50 Teile Monochlorbenzol) zudosiert und die Emulsion mittels einer weiteren Pumpe durch einen weiteren Rohrreaktor gepumpt.

Nach einer Verweilzeit von weiteren 10 Min. wird die Emulsion in einem Trenngefäß getrennt und die Polycarbonatlösung nach bekannten Verfahren z.B. durch Zentrifugentechnik, elektrolytfrei gewaschen.

Die Polycarbonatlösung wird in Eindampfanlagen einkonzentriert und auf einem Ausdampfextruder von Restlösungsmittel befreit.

In der wässrigen Phase aus dem Trenngefäß werden gemessen:

$$\text{Summe BPA / PHE}^* = 10 \text{ ppm}$$

Der Wassergehalt in der org. Phase** beträgt 0,25%

* Summe an freiem BPA und Phenolen, gemessen durch UV-Spektroskopie der wässrigen Phase bei 294 nm, z.B. in einem Spektrometer der Fa. Perkin-Elmer

** der Wassergehalt der org. Phase aus dem Trenngefäß wird durch eine Titration nach Karl Fischer bestimmt

Am Polycarbonatgranulat werden folgende analytische Daten bestimmt:

YI = 1,35*
Eta rel = 1,195**
Phenol. OH = 85 ppm***

* gemessen nach ASTM E 313
** gemessen nach ISO 1628/4
*** gemessen durch UV-Spektroskopie bei 546 nm nach Farbreaktion der phenol. Endgruppen mit $TiCl_4$

**Beispiel 2**

In einem Umpumpreaktor, bestehend aus Wärmetauscher mit Umpumpschleife werden vor einer Pumpe über ein T-Stück 27.000 kg/h einer alkalischen Bisphenol A-Lösung, die 15 % Gew.-% BPA und 2,1 mol Natronlauge pro mol BPA enthält, sowie über ein weiteres T-Stück 2090 kg/h Phosgen gelöst in 24300 kg/h Lösungsmittel, welches aus 50 Gew.-% Methylenchlorid und 50 Gew.-% Monochlorbenzol besteht, eindosiert.

Zur Aufrechterhaltung der Alkalität werden 460 kg/h 32 %ige Natronlauge zudosiert und das Reaktionsgemisch über einen Wärmetauscher und einen ungerührten Verweilkessel zurück zur Pumpe geleitet, wobei die o.g. Stoffströme zudosiert werden.

Mittels einer Mengenmessung wird die umgepumpte Menge zu 270 m$^3$/h bestimmt.

Die Temperatur beträgt 38°C.

Eine Teilmenge der Emulsion, die so groß ist wie die zufließenden Rohstoffe, wird vor den Dosierstellen für BPA und Phosgen aus dem Verweilkessel einer weiteren Pumpe zugeleitet und durch einen Rohrreaktor gepumpt. Diesem Strom werden 1120 kg/h Natronlauge (32 Gew.-%) sowie 151 kg/h p-tert.-Butylphenol, gelöst in 604 kg Lösungsmittelgemisch, zudosiert. Nach einer Verweilzeit von 9 Min. werden 23 kg/h N-Ethylpiperidin in Form einer 5,3 %igen Lösung in Lösungsmittelgemisch (50 Teile Methylenchlorid und 50 Teile Monochlorbenzol) zudosiert und die Emulsion mittels einer weiteren Pumpe durch einen weiteren Rohrreaktor gepumpt.

Nach einer Verweilzeit von 9 Min. wird die Emulsion in einem Trenngefäß getrennt und die Polycarbonatlösung nach bekannten Verfahren z.B. durch Zentrifugentechnik, elektrolytfrei gewaschen.

Die Polycarbonatlösung wird in Eindampfanlagen einkonzentriert und auf einem Ausdampfextruder von Restlösungsmittel befreit.

In der wässrigen Phase aus dem Trenngefäß werden gemessen:

$$\text{Summe BPA / PHE} = 20 \text{ ppm}$$

Der Wassergehalt in der org. Phase beträgt 0,21 %

Am Polycarbonatgranulat werden folgende analytische Daten bestimmt:

```
YI            = 1,38
Eta rel       = 1,197
Phenol. OH    = 70 ppm
```

## Beispiel 3

In einem Umpumpreaktor werden vor der Pumpe über ein T-Stück 35.000 kg/h einer alkalischen Bisphenol A-Lösung, die 15 Gew.% BPA und 2,1 mol Natronlauge pro mol BPA enthält, sowie über ein weiteres T-Stück 2730 kg/h Phosgen gelöst in 29750 kg/h Lösungsmittel, welches aus 50 Gew.-% Methylenchlorid und 50 Gew.-% Monochlorbenzol besteht, eindosiert.

Zur Aufrechterhaltung der Alkalität werden 520 kg/h 32 %ige Natronlauge zudosiert und das Reaktionsgemisch über einen Wärmetauscher und einen ungerührten Verweilkessel zurück zur Pumpe geleitet, wobei die o.g. Stoffströme zudosiert werden.

Mittels einer Mengenmessung wird die umgepumpte Menge zu 260 m$^3$/h bestimmt.

Die Temperatur beträgt 38°C.

Eine Teilmenge der Emulsion, die so groß ist wie die zufließenden Rohstoffe, wird vor den Dosierstellen für BPA und Phosgen aus dem Verweilkessel einer weiteren Pumpe zugeleitet und durch einen Rohrreaktor gepumpt. Diesem Strom werden 1540 kg/h Natronlauge (32 Gew.-%) sowie 193 kg/h p-tert.-Butylphenol, gelöst in 772 kg Lösungsmittelgemisch, zudosiert. Nach einer Verweilzeit von 7 Min. werden 28 kg/h N-Ethylpiperidin in Form einer 5,1 %igen Lösung in Lösungsmittelgemisch (50 Teile Methylenchlorid und 50 Teile Monochlorbenzol) zudosiert und die Emulsion mittels einer weiteren Pumpe durch einen weiteren Rohrreaktor gepumpt.

Nach einer Verweilzeit von 7 Min. wird die Emulsion in einem Trenngefäß getrennt und die Polycarbonatlösung nach bekannten Verfahren z.B. durch Zentrifugentechnik, elektrolytfrei gewaschen.

Die Polycarbonatlösung wird in Eindampfanlagen einkonzentriert und auf einem Ausdampfextruder von Restlösungsmittel befreit.

In der wässrigen Phase aus dem Trenngefäß werden gemessen:

$$\text{Summe BPA / PHE} = 15 \text{ ppm}$$

Der Wassergehalt in der org. Phase beträgt 0,19%

Am Polycarbonatgranulat werden folgende analytische Daten bestimmt:

YI = 1,35
Eta rel = 1,196
Phenol. OH = 80 ppm

### Beispiel 4

In einem Umpumpreaktor werden vor der Pumpe über ein T-Stück 35.000 kg/h einer alkalischen Bisphenol A-Lösung, die 15 Gew.% BPA und 2,1 mol Natronlauge pro mol BPA enthält, sowie über ein weiteres T-Stück 2730 kg/h Phosgen gelöst in 29750 kg/h Lösungsmittel, welches aus 50 Gew.-% Methylenchlorid und 50 Gew.-% Monochlorbenzol besteht, eindosiert.

Zur Aufrechterhaltung der Alkalität werden 520 kg/h 32 %ige Natronlauge zudosiert und das Reaktionsgemisch über einen Wärmetauscher und einen ungerührten Verweilkessel zurück zur Pumpe geleitet, wobei die o.g. Stoffströme zudosiert werden.

Mittels einer Mengenmessung wird die umgepumpte Menge zu 600 m$^3$/h bestimmt.

Die Temperatur beträgt 38°C.

Eine Teilmenge der Emulsion, die so groß ist wie die zufließenden Rohstoffe, wird vor den Dosierstellen für BPA und Phosgen aus dem Verweilkessel einer weiteren Pumpe zugeleitet und durch einen Rohrreaktor gepumpt. Diesem Strom werden 1540 kg/h Natronlauge (32 Gew.-%) sowie 193 kg/h p-tert.-Butylphenol, gelöst in 772 kg Lösungsmittelgemisch, zudosiert. Nach einer Verweilzeit von 7 Min. werden 28 kg/h N-Ethylpiperidin in Form einer 5,1 %igen Lösung in Lösungsmittelgemisch (50 Teile Methylenchlorid und 50 Teile Monochlorbenzol) zudosiert und die Emulsion mittels einer weiteren Pumpe durch einen weiteren Rohrreaktor gepumpt.

Nach einer Verweilzeit von 7 Min. wird die Emulsion in einem Trenngefäß getrennt und die Polycarbonatlösung nach bekannten Verfahren z.B. durch Zentrifugentechnik, elektrolytfrei gewaschen.

Die Polycarbonatlösung wird in Eindampfanlagen einkonzentriert und auf einem Ausdampfextruder von Restlösungsmittel befreit.

In der wässrigen Phase aus dem Trenngefäß werden gemessen:

$$\text{Summe BPA / PHE} = 10 \text{ ppm}$$

Der Wassergehalt in der org. Phase beträgt 0,26%

Am Polycarbonatgranulat werden folgende analytische Daten bestimmt:

YI = 1,40
Eta rel = 1,194
Phenol. OH = 85 ppm

### Vergleichsbeispiel 1

Die Mengenverhältnisse an BPA, Phosgen und NaOH entsprechen dem aus DE-A 4 227 372, in der nichts über Umpumpraten offengelegt wird.

Wie in Beispiel 1 beschrieben, jedoch werden anstelle 360 kg/h NaOH 32 % nun 435 kg/h NaOH 32 % in den Umpumpreaktor und anstelle 1050 kg/h nun 975 kg/h NaOH 32 % hinter den Umpumpreaktor dosiert. Anstelle der 1848 kg/h Phosgen werden 1900 kg/h dosiert.

Außerdem beträgt die umgepumpte Menge anstelle 260 m$^3$/h hier 100 m$^3$/h.

In der wässrigen Phase aus dem Trenngefäß werden gemessen:

Summe BPA / PHE = 210 ppm

Der Wassergehalt in der org. Phase beträgt 1,2%

Am Polycarbonatgranulat werden folgende analytische Daten bestimmt:

YI = 1,9
Eta rel . = 1,190

Phenol. OH =     170 ppm

**Vergleichsbeispiel 2**

Wie in Beispiel 1 beschrieben, jedoch werden anstelle 360 kg/h NaOH 32 % nun 910 kg/h NaOH 32 % in den Umpumpreaktor und anstelle 1050 kg/h nun 500 kg/h NaOH 32 % hinter den Umpumpreaktor dosiert.
In der wässrigen Phase aus dem Trenngefäß werden gemessen:

$$\text{Summe BPA / PHE} \quad = 150 \, \text{ppm}$$

Der Wassergehalt in der org. Phase beträgt 1,5%
Am Polycarbonatgranulat werden folgende analytische Daten bestimmt:

YI =              1,8
Eta rel =         1,193
Phenol. OH =      160 ppm

**Vergleichsbeispiel 3**

Wie in Beispiel 1 beschrieben, jedoch beträgt die umgepumpte Menge anstelle 240 m$^3$/h hier 750 m$^3$/h, die Natronlauge wird wie im Vergleichsbeispiel 1 gleich verteilt.
In der wässrigen Phase aus dem Trenngefäß werden gemessen:

$$\text{Summe BPA / PHE} \quad = \quad 120 \, \text{ppm}$$

Der Wassergehalt in der org. Phase beträgt 1,8%
Am Polycarbonatgranulat werden folgende analytische Daten bestimmt:

YI =              1,8
Eta rel =         1,191
Phenol. OH =      140 ppm

**Vergleichsbeispiel 4**

Wie in Beispiel 1 beschrieben, jedoch werden nur 1720 kg/h Phosgen dosiert.
In der wässrigen Phase aus dem Trenngefäß werden gemessen:

$$\text{Summe BPA / PHE} \quad = 750 \, \text{ppm}$$

Der Wassergehalt in der org. Phase beträgt 2,5%
Am Polycarbonatgranulat werden folgende analytische Daten bestimmt:

YI              = 2,1
Eta rel         = 1,189
Phenol. OH      = 340 ppm

**Patentansprüche**

1. Verfahren zur kontinuierlichen Herstellung von Polycarbonaten mit geringer Belastung des Abwassers mit Restorganika (Restphenolen) nach dem Phasengrenzflächenverfahren, umfassend die folgenden Verfahrensschritte:

A. Kontinuierliches Zusammenführen der organischen Phase und der wässrigen Phase in einem Umpumpreaktor, gegebenenfalls unter Verwendung eines Mischers, wobei die organische Phase ein für das Polycarbonat geeignetes Lösungsmittel ist und bereits das Phosgen enthält und die wässrige Phase aus Wasser und einem Gemisch von Alkalilauge und phenolischen Komponenten (Bisphenol und gegebenenfalls Monophenol als Kettenabbrecher) besteht,

wobei

B. im Umpumpreaktor durch den Wärmetauscher eine Temperatur von weniger als 60°C eingestellt ist, der Umpumpreaktor eine mittlere Verweilzeit von mindestens 2 Minuten anbietet und eine Teilmenge der entstandenen Emulsion kontinuierlich über den Verweilkessel aus dem Umpumpreaktor abgenommen wird,

und

C. die entnommene Teilmenge dieser Emulsion dann durch Rohrreaktoren gepumpt wird, die mit Misch- und Verweilzonen ausgestattet sind und insgesamt eine Verweilzeit zwischen 2 Minuten und 40 Minuten anbieten,

wobei

1) das Verhältnis (ausgedrückt in Molen/Mole) von dosierter Phosgenmenge zur Phosgenmenge, die theoretisch notwendig ist, um alles Bisphenol und Phenol zur Reaktion zu bringen, zwischen 1,12 und 1,22 beträgt,

2) Phosgenlösung und Bisphenollösung werden dabei innerhalb des Umpumpreaktors direkt hinter dem Verweilkessel in die Umpumpschleife dosiert, der Kettenabbrecher kann ebenfalls in diese Umpumpschleife oder gegebenenfalls direkt in die Rohrreaktoren gefördert werden, s. 5)

3) innerhalb des Umpumpreaktors wird dabei auf der Saugseite der Pumpe Alkalilauge in einer Menge von 15 - 40 % der insgesamt nachzudosierenden Menge nachdosiert,

4) innerhalb des Umpumpreaktors werden in die Umpumpschleife gemäß 2) Bisphenol A- und Phosgenlösungen so zudosiert, dass deren Gesamtmenge (Die Summe aus beiden Lösungen, gemessen in $m^3/h$) im Verhältnis zur Menge an umgepumpter Reaktionsemulsion, gemessen als Durchflußmenge an einem Querschnitt der Umpumpschleife (ebenfalls gemessen in $m^3/h$), zwischen 1:3 und 1:12 liegt und die am Verweilkessel entnommene Teilmenge der Gesamtmenge der zudosierten Lösungen entspricht,

5) in die aus dem Verweilkessel entnommene Teilmenge, unmittelbar vor der Einleitung in den Rohrreaktor, weitere Alkalilauge (85 - 60 % der gesamten nachzudosierenden Alkalilauge) und gegebenenfalls Kettenabbrecher zugegeben wird und

6) nach weiteren 1 - 20 Minuten Verweilzeit im Rohrreaktor Katalysator zugegeben wird.

2. Verfahren gemäß Anspruch 1 **dadurch gekennzeichnet, daß** das unbehandelte Reaktionsabwasser ein Gehalt an phenolischen Komponenten von weniger als 100 ppm aufweist.

## Revendications

1. Procédé pour la préparation en continu de polycarbonates, associée à une faible pollution des eaux usées par des matières organiques résiduelles (phénols résiduels) selon la méthode interfaciale diphasique comprenant les étapes de procédé suivantes:

A. Réunion continue de la phase organique et de la phase aqueuse dans un réacteur de transvasement par pompe, le cas échéant, en utilisant un mélangeur, la phase organique étant un solvant approprié au polycarbonate et contenant déjà le phosgène et la phase aqueuse étant constituée d'eau et d'un mélange de lessive alcaline et de composants phénoliques (bisphénol et éventuellement monophénol comme agent de rupture de chaîne),

B. une température inférieure à 60 °C étant ajustée dans le réacteur de transvasement par pompe par l'échangeur thermique, le réacteur de transvasement par pompe offrant une durée d'arrêt momentané moyenne d'au moins 2 minutes et un volume partiel de l'émulsion formée étant prélevé en continu du réacteur de transvasement par pompe via la cuve d'arrêt momentané,

et

C. le volume partiel prélevé de cette émulsion étant ensuite pompé au travers de réacteurs tubulaires, qui sont dotés de zones de mélangeage et d'arrêt momentané et qui offrent ensemble une durée d'arrêt momentané comprise entre 2 et 40 minutes,

1) le rapport (exprimé en mol/mol) entre la proportion de phosgène dosée et la proportion de phosgène qui est théoriquement nécessaire pour faire entrer en réaction tout le bisphénol et le phénol, est compris entre 1,12 et 1,22,

2) la solution de phosgène et la solution de bisphénol sont dosées à l'intérieur du réacteur de transvasement par pompe, directement en aval de la cuve d'arrêt momentané, dans la boucle de transvasement par pompe, l'agent de rupture de chaîne pouvant également être refoulé dans cette boucle de transvasement par pompe ou, le cas échéant, directement dans les réacteurs tubulaires, cf. point 5)

3) à l'intérieur du réacteur de transvasement par pompe, de la lessive alcaline est dosée par après du côté aspiration de la pompe, dans une proportion comprise entre 15 et 40 % de la proportion totale à doser par après,

4) à l'intérieur du réacteur de transvasement par pompe, les solutions de bisphénol A et de phosgène sont ajoutées progressivement dans la boucle de transvasement par pompe selon 2), de manière telle que leur volume total (la somme des deux solutions, mesuré en m$^3$/h) par rapport au volume d'émulsion de réaction transvasée par pompe, déterminé comme volume d'écoulement sur une section de la boucle de transvasement par pompe (également mesuré en m$^3$/h), soit compris entre 1:3 et 1:12 et que le volume partiel prélevé dans la cuve d'arrêt momentané corresponde au volume total des solutions ajoutées progressivement,

5) un volume supplémentaire de lessive alcaline (85 à 60 %, de la totalité de la lessive alcaline à ajouter par après) et, le cas échéant, d'agent de rupture de chaîne, est ajouté dans le volume partiel prélevé de la cuve d'arrêt momentané, immédiatement en amont de l'admission du réacteur tubulaire, et

6) le catalyseur est ajouté après 1 à 20 minutes supplémentaires d'arrêt momentané dans le réacteur tubulaire.

**2.** Procédé selon la revendication 1, **caractérisé en ce que** les eaux résiduaires de réaction non traitées présentent une concentration en composants phénoliques inférieure à 100 ppm.

**Claims**

**1.** Process for continuous production of polycarbonates with a low content of residual organic materials (residual phenols) in the wastewater by the phase interface process, comprising the following process steps:

A.
continuous merging of the organic phase and the aqueous phase in a circulating reactor, optionally using a mixer, the organic phase being a solvent suitable for the polycarbonate and already containing the phosgene and the aqueous phase consisting of water and a mixture of lye and phenolic components (bisphenol and optionally monophenol as chain terminator),
wherein
B.
a temperature lower than 60°C is adjusted in the circulating reactor by the heat exchanger, the circulating reactor provides a mean residence time of at least 2 minutes and a portion of the resulting emulsion is continuously removed from the circulating reactor via the residence tank,
and
C.
the removed portion of emulsion is then pumped through tubular reactors which are equipped with mixing and residence zones and in total provide a residence time between 2 minutes and 40 minutes,
wherein

1) the ratio (expressed in mol/mol) of added quantity of phosgene to the quantity of phosgene which is theoretically necessary in order to react all bisphenol and phenol is between 1.12 and 1.22;

2) in the process phosgene solution and bisphenol solution are added directly into the circulating loop inside the circulating reactor and downstream of the residence tank. The chain terminator can also be conveyed into this circulating loop or optionally directly into the tubular reactors, see 5)

3) lye in a quantity of 15 to 40 % of the total quantity to be subsequently added is subsequently added inside the circulating reactor at the suction side of the pump,

4) bisphenol A and phosgene solutions are introduced into the circulating loop inside the circulating reactor in accordance with 2) in such a way that the total quantity thereof (the sum of both solutions, measured in m$^3$/h) in relation to the quantity of circulated reaction emulsion, measured as flow quantity at a cross-section of the circulating loop (also measured in m$^3$/h) is between 1:3 and 1:12 and the portion removed from the residence tank corresponds to the total quantity of solutions introduced,

**EP 1 249 463 B1**

5) further lye (85 to 60 % of the total lye to be subsequently added) and optionally chain terminator is added into the portion removed from the residence tank, directly prior to introduction into the tubular reactor and

6) catalyst is added after a further 1 to 20 minutes' residence time in the tubular reactor.

2. Process according to claim 1, **characterised in that** the untreated reaction wastewater has a phenolic component content of less than 100 ppm.